# EUROPEAN PATENT APPLICATION

(11) **EP 4 576 293 A1**
(43) Date of publication of application: **25.06.2025**
(21) Application number: 24201457.9
(22) Date of filing: 19.09.2024
(51) Int. Cl.: H01M 10/04, H01M 50/107, H01M 50/152, H01M 50/155, H01M 50/167, H01M 50/171, H01M 50/179, H01M 50/186, H01M 50/188, H01M 50/342, H01M 50/559

(54) **COVER PLATE ASSEMBLY AND BATTERY**

(30) Priority: 18.12.2023 CN 202311750197; 18.12.2023 CN 202323460003 U; 04.03.2024 WO PCT/CN2024/079945
(71) Applicant: Eve Energy Co., Ltd., Huizhou, Guangdong 516006 (CN)
(72) Inventor: LI, Jidong, Huizhou, Guangdong, 516006 (CN); YANG, Xiao, Huizhou, Guangdong, 516006 (CN); FU, Zhibo, Huizhou, Guangdong, 516006 (CN); WANG, Xingjian, Huizhou, Guangdong, 516006 (CN); SONG, Pengyuan, Huizhou, Guangdong, 516006 (CN)
(74) Representative: Murgitroyd & Company

(57) **Abstract**

A cover plate assembly and a battery are provided. The cover plate assembly includes a top cover and a connection assembly including a connection sheet made of aluminum. The top cover is provided on the connection sheet. The top cover includes a core material and an outer layer located outside the core material. The core material is welded to the connection sheet by the outer layer. A material of the core material includes copper and a material of the outer layer includes nickel.

## Description

### TECHNICAL FIELD

The present application relates to the technical field of batteries, and more particularly, to a cover plate assembly and a battery.

### BACKGROUND

In the related art, a top cover assembly of the battery is an important component of a battery. The top cover assembly of the battery is mainly assembled from a top cover, an explosion-proof sheet, a connection sheet, a sealing rubber ring, an insulation rubber ring, and the like. The top cover is made of a metal material. The top cover serves as an electrode for conducting current in a cylindrical battery and plays a supporting role in a production assembly process. The current connection manner of the explosion-proof sheet and the top cover is generally welding, and the effect of hot-melt welding is achieved from the surface of the top cover to the explosion-proof aluminum sheet by laser energy.

### SUMMERY

The present application provides a cover plate assembly and a battery to solve the above technical problems.

In a first aspect, the present application provides a cover plate assembly including:
a connection assembly including a connection sheet made of aluminum; and
a top cover provided on the connection sheet, the top cover comprising a core material and an outer layer located outside the core material, wherein the core material is welded to the connection sheet by the outer layer, a material of the core material comprises copper and a material of the outer layer comprises nickel.

In a second aspect, the present application also provides a battery including:
a housing in which a cavity is formed;
a core disposed in the housing; and
a cover plate assembly coveringly disposed on an opening of the housing, in which the cover plate assembly includes a top cover and a connection assembly, the connection assembly is connected to the core, the connection assembly includes a connection sheet made of aluminum, the top cover is provided on the connection sheet, the top cover includes a core material and an outer layer located outside the core material, the core material is welded to the connection sheet by the outer layer, a material of the core material includes copper and a material of the outer layer includes nickel.

### BENEFICIAL EFFECT

Advantageous effects of the present application are as follows. According to the cover plate assembly provided in the present application, the top cover is used as an electrode, one end of the connection assembly is connected to the top cover, and the other end of the connection assembly is connected to the core. The core material of the top cover is made of copper, and the copper material has good electrical conductivity, low resistance, low cost, and low energy consumption. The connection sheet is connected to the top cover to transmit current, and the connection sheet is made of aluminum. When thermal runaway occurs, the connection sheet can be quickly broken, so that the connection between the top cover and the core is disconnected, and the resistance of the aluminum material is smaller. The material of the core material is copper, and the material of the outer layer is nickel. The reflectivity of the nickel to the laser that is used in the laser welding is relatively low, and the reflectivity of the copper to the laser that is used in the laser welding is relatively high. The outer layer is arranged on the outer surface of the core material, so that the nickel is wrapped on the outer surface of the copper. Since the reflectivity of the nickel to the laser is lower than the reflectivity of the copper to the laser, the top cover that the nickel is wrapped on the outer surface of the copper can improve the processability of the whole top cover compared with the cover plate only having the copper, thereby reducing the welding difficulty of the top cover and the connection sheet. Meanwhile, the outer layer is disposed outside the core material, which can play a protective role for the core material, avoid corrosion of the core material, and improve the service life of the cover plate assembly.

According to the battery provided in the present application, the above-mentioned cover plate assembly is used as an electrode, one end of the connection assembly is connected to the top cover, and the other end of the connection assembly is connected to the core. The core material of the top cover is made of copper, and the copper material has good electrical conductivity, low resistance, low cost, and low energy consumption. The connection sheet is connected to the top cover to transmit current, and the connection sheet is made of aluminum. When thermal runaway occurs, the connection sheet can be quickly broken, so that the connection between the top cover and the core is disconnected, and the resistance of the aluminum material is smaller. The material of the core material is copper, and the material of the outer layer is nickel. The reflectivity of the nickel to the laser that is used in the laser welding is relatively low, and the reflectivity of the copper to the laser that is used in the laser welding is relatively high. The outer layer is arranged on the outer surface of the core material, so that the nickel is wrapped on the outer surface of the copper. Since the reflectivity of the nickel to the laser is lower than the reflectivity of the copper to the laser, the top cover that the nickel is wrapped on the outer surface of the copper can improve the processability of the whole top cover compared with the cover plate only having the copper, thereby reducing the welding difficulty of the top cover and the connection sheet. Meanwhile, the outer layer is disposed outside the core material, which can play a protective role for the core material, avoid corrosion of the core material, and improve the service life of the cover plate assembly.

### BRIEF DESCRIPTION OF THE DRAWINGS

FIG. 1 is a schematic structural diagram of a cover plate assembly according to embodiments of the present application;
FIG. 2 is a top view of a bottom in FIG. 1;
FIG. 3 is a partial cross-segmental view of a top cover in FIG. 1;
FIG. 4 is a schematic structural diagram of an orifice plate in FIG. 1;
FIG. 5 is an enlarged schematic view at detail A in FIG. 4;
FIG. 6 is a schematic structural diagram of a battery according to embodiments of the present application; and
FIG. 7 is a schematic structural diagram showing another state of the battery in FIG. 6.

### Reference signs:

1000, battery; 100, cover plate assembly; 101, connection assembly; 102, connection sheet; 103, top cover; 104, core material; 105, outer layer; 106, orifice plate; 107, first connection portion; 108, second connection portion; 109, first gap; 110, first notch; 111, welding portion; 112, first side; 113, second side; 114, seal; 115, first extension; 116, first connection segment; 117, second connection segment; 118, second gap; 119, second notch; 120, insulating member; 200, housing; 201, second extension; and 300, core.

### DETAILED DESCRIPTION

In the description of the present application, unless otherwise expressly specified and limited, the terms "conjoint", "connect", and "fix" are to be understood in a broad sense, for example, as a fixed connection, as a detachable connection, or as a one-piece connection; also as a mechanical connection or an electrical connection; or may be directly connected or indirectly connected by means of an intermediate medium; or may be internal communication of the two elements or interaction of the two elements. The specific meaning of the above terms in the present application may be understood by one of ordinary skill in the art as the case may be.

For the purposes of this application, unless otherwise expressly specified and limited, that the first feature is "over" or "under" the second feature may include the first feature is in direct contact with the second feature, or may include the first feature is not in direct contact with the second feature, but by means of a separate feature therebetween. Furthermore, that the first feature is "on", "above" and "over" the second feature includes the first feature is directly above and diagonally above the second feature, or simply indicating that the first feature is horizontally higher than the second feature. That the first feature is "below", "under", and "beneath" the second feature includes the first feature is directly below and diagonally below the second feature, or simply indicating that the first feature is horizontally smaller than the second feature.

In the description of this embodiment, the terms "upper", "lower", "right", and other orientation or positional relationships are based on the orientation or positional relationship shown in the accompanying drawings, and are only for convenience of description and simplified operation. It is not intended to indicate or imply that the device or the element referred to must have a specific orientation, be constructed and operated in a specific orientation, and therefore should not be construed as a limitation on the present application. In addition, the terms "first" and "second" are only used for descriptive purposes and have no special meaning.

In the related art, a top cover assembly of a battery is an important component of a battery. The top cover assembly of the battery is mainly assembled from a top cover, an explosion-proof sheet, a connection sheet, a sealing rubber ring, an insulation rubber ring, and the like. The top cover is made of a metal material. The top cover serves as an electrode for conducting current in a cylindrical battery and plays a supporting role in a production assembly process. The current connection manner of the explosion-proof sheet and the top cover is generally welding, and the effect of hot-melt welding is achieved from the top cover surface to the explosion-proof aluminum sheet by laser energy. The existing top cover is mostly made of steel, which has a large internal resistance. The explosion-proof sheet and the top cover are made of different materials, thereby making welding difficult.

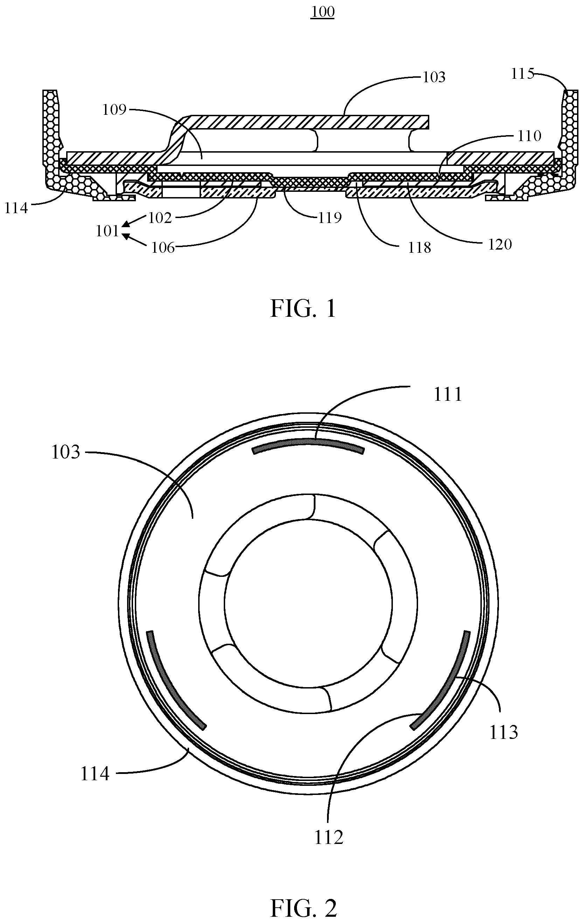

In view of this, the present application provides a cover plate assembly 100. FIGS. 1 to 5 are schematic structural diagrams of the cover plate assembly 100 according to embodiments of the present application. The cover plate assembly 100 provided in the present application has a small internal resistance and is welded to the top cover 103. The welding position is adopted plating process. The welding difficulty is low and the connection strength is high. The cover plate assembly 100 will be described in detail below in connection with the main drawings.

Referring to FIG. 1, the cover plate assembly 100 includes a top cover 103 and a connection assembly 101. The connection assembly 101 includes a connection sheet 102 made of aluminum. The top cover 103 is provided on the connection sheet 102, and the top cover 103 includes a core material 104 and an outer layer 105 located outside the core material 104. The core material 104 is welded to the connection sheet 102 through the outer layer 105. The core material 104 includes copper and the outer layer 105 includes nickel.

In the technical solution of the present application, the top cover 103 is used as an electrode, one end of the connection assembly 101 is connected to the top cover 103, and the other end of the connection assembly 101 is connected to the core 300. The core material 104 of the top cover 103 is made of copper. The copper material has good electrical conductivity, low resistance, low cost, and low energy consumption. The connection sheet 102 is connected to the top cover 103 to transmit electric current, and the connection sheet 102 is made of aluminum. When thermal runaway occurs, the connection sheet 102 can be quickly broken to disconnect the top cover 103 from the core 300, and the resistance of the aluminum material is small. The material of the core material 104 is copper, and the material of the outer layer 105 is nickel. The reflectivity of the nickel to the laser that is used in the laser welding is relatively low, and the reflectivity of the copper to the laser that is used in the laser welding is relatively high. The outer layer 105 is provided on the outer surface of the core material 104, so that the nickel is wrapped on the outer surface of the copper. Since the reflectivity of the nickel to the laser is lower than the reflectivity of the copper to the laser, the top cover 103 that the nickel is wrapped on the outer surface of the copper can improve the processability of the whole top cover 103 compared with the cover plate only having the copper, thereby reducing the welding difficulty of the top cover 103 and the connection sheet 102. Meanwhile, the outer layer 105 is disposed outside the core material 104, which can play a protective role for the core material 104, avoid corrosion of the core material 104, and improve the service life of the cover plate assembly 100.

It should be noted that, in the present embodiment, the connection member 101 is provided below the top cover 103, and one end of the connection member 101 is connected to the top cover 103, and the other end of the connection member 101 is connected to the core 300 to transmit current.

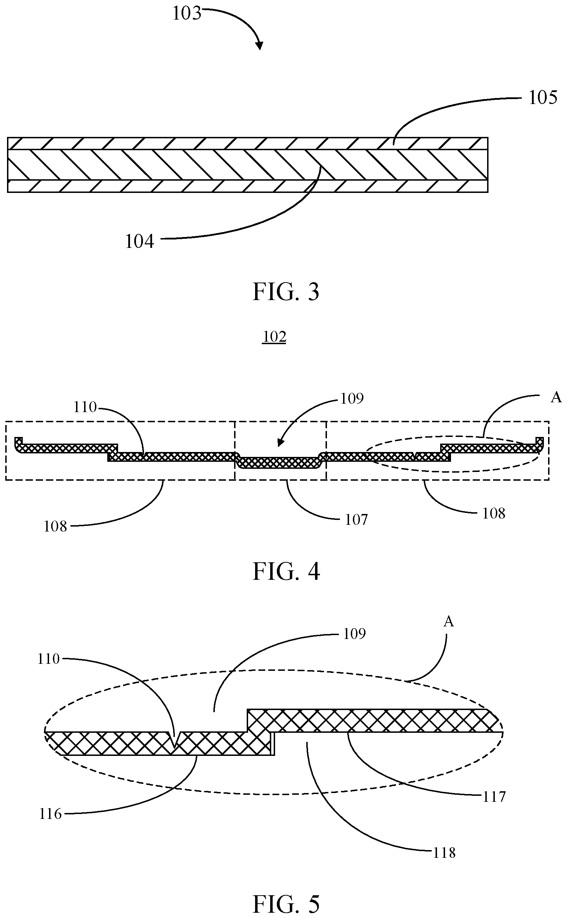

More specifically, the top cover 103 and the connection sheet 102 are connected by welding, and the core material 104 of the top cover 103 is made of copper. The reflection of the copper to the laser that is used in the laser welding is relatively high. In this way, the welding process is complicated and the welding is difficult. The reflection of the nickel to the laser that used in the laser welding is relatively low. Therefore, the top cover 103 that the nickel is wrapped on the outer surface of the copper can improve the workability of the entire top cover 103 compared with the cover plate only having the copper. Specifically, in the present embodiment, referring to FIG. 3, the outer layer 105 is wrapped on the outer side of the core material 104. On the one hand, the outer layer 105 is made of nickel, and nickel has low reflectivity for laser used in the laser welding. So, the outer side of copper is coated with a layer of nickel, which makes it easier to weld the top cover 103 to the connecting sheet 102. On the other hand, the outer layer 105 is wrapped around the outer surface of the core material 104 and can also protect the core material 104 to prevent the core material 104 from being exposed to the air to be oxidized and corroded, thereby increasing the service life of the top cover 103.

Specifically, it is necessary to consider the thickness of the core material 104 and the thickness of the outer layer 105 in the practical application. In the present embodiment, the thickness of the core material 104 is denoted by D₁ and the thickness of the outer layer 105 is denoted by D₂. The applicant repeatedly tests and studies. Thus, it shows that when the thickness of the core material 104 satisfies D₁ ≥ 0.1mm and the thickness of the outer layer 105 satisfies D2 ≥ 3µm, the connection strength of the connection sheet 102 meets the requirements, and the resistance is correspondingly small.

It should be noted that it is necessary to consider not only the resistance of the connection sheet 102, but also the connection strength and the occupied space of the connection sheet 102 in the practical application. First, it is necessary to ensure the connection strength of the connection sheet 102. If the thickness of the connection sheet 102 is relatively thin, the connection strength thereof is relatively weak, and the connection sheet 102 is easily broken. If the thickness of the connection sheet 102 is relatively thick, the occupied space of the connection sheet 102 increases, resulting in an increase in the entire size of the top cover 103. Further, in the present embodiment, the thickness of the core material 104 satisfies 0.4mm≤D₁≤0.8mm, and the thickness of the outer layer 105 satisfies 4µm≤D₂≤ 9µm. Specifically, the thickness of the core material 104 may be 0.4 mm, 0.45mm, 0.5mm, 0.55mm, 0.6 mm, 0.65mm, 0.7mm, 0.75mm, or 0.8 mm. The thickness of the outer layer 105 may be 4µm, 4.5µm, 5µm, 5.5µm, 6µm, 6.5µm, 7µm, 7.5µm, 8µm, 8.5µm, or 9µm, and may be selected according to actual conditions.

Another function of the connection assembly 101 is to avoid thermal runaway. When the internal temperature of the battery 1000 is too high or the pressure thereof is too high, the connection assembly 101 can be broken to disconnect the top cover 103 from the core 300. Specifically, in the present embodiment, the connection assembly 101 further includes an orifice plate 106 connected at the side of the connection sheet 102 facing away from the top cover 103. The orifice plate 106 is connected to the core 300. In the actual current transfer process, the core 300 transfers current to the orifice plate 106, and the orifice plate 106 is welded to the connection sheet 102, so the orifice plate 106 transfers the current to the connection sheet 102, and the connection sheet 102 transfers the current to the top cover 103. The orifice plate 106 is formed with a second notch 119. When the internal pressure of the battery 1000 is too high or the temperature thereof is too high, the orifice plate 106 breaks at the position of the second notch 119, thereby disconnecting the internal connection of the battery 1000, avoiding the thermal runaway, and the like.

In the present embodiment, referring to FIG. 4 and FIG. 5, the connection sheet 102 includes a first connection portion 107 and a second connection portion 108 connected to the periphery of the first connection portion 107. The second connection portion 108 is connected to the top cover 103. It should be noted that, in view of practical application scenarios and cost saving, when the outer layer 105 is plated on the core material 104, the outer layer 105 may be plated only at a welding position, that is, the outer layer 105 covers only a part of the core material 104 (a position where the welding is required). So, the thickness of the top cover 103 can be reduced to a certain extent without affecting laser welding. However, considering the plating process and the service life of the top cover 103, as a preferred embodiment, referring to FIG. 2, the outer layer 105 is completely wrapped on the outer side of the core material 104, and the core material 104 and the exterior are isolated, so as to avoid corrosion of the core material 104, thereby improving the service life of the top cover 103.

Further, the first connection portion 107 is connected to the orifice plate 106, and the first connection portion 107 is recessed in a direction away from the top cover 103 to form a first gap 109 with the top cover 103. The first gap 109 functions to isolate the first connection portion 107 from the top cover 103, so that the top cover 103 is connected to the second connection portion 108 only, and the first connection portion 107 is connected to the orifice plate 106 only. When the thermal runaway of the battery 1000 occurs, the orifice plate 106 is disconnected from the first connection portion 107 after the orifice plate 106 is broken, that is, the orifice plate 106 is disconnected from the first connection portion 107 to disconnect current transfer.

Further, the second connection portion 108 is formed with a first notch 110, an opening of the first notch 110 is provided toward the top cover 103, and the width of the first notch 110 is tapered in the direction of the second connection portion 108 facing toward the orifice plate 106. The first notch 110 serves to disconnect the connection of the first connection portion 107 and the second connection portion 108, which serves as a secondary protection function. Specifically, when the thermal runaway of the battery 1000 occurs, the orifice plate 106 is broken at the position of the second notch 119, the orifice plate 106 is disconnected from the connection sheet 102 (that is, the cover plate assembly 100 is disconnected from the core 300). Meanwhile, the second connection portion 108 is broken at the first notch 110, the second connection portion 108 is disconnected from the first connection portion 107, and the first notch 110 functions as a secondary protection function. When the orifice plate 106 is not broken due to special reasons, the second connection portion 108 is broken at the first notch 110, which can also cause the entire battery 1000 to be powered off to avoid thermal runaway. At the same time, when the orifice plate 106 is broken, the second connection portion 108 is broken at the first notch 110 if the short circuit caused by the lap joint occurs due to a special reason, and thus the entire battery 1000 can be similarly turned off.

Still further, referring to FIG. 5, the second connection portion 108 further includes a first connection segment 116 connected to the first connection portion 107, and a second connection segment 117 provided around the first connection segment 116. The second connection segment 117 is connected to the top cover 103. The first notch 110 is formed on the first connection segment 116. Specifically, a second gap 118 is formed between both of the first connection segment 116 and the second connection segment 117 (that is, the second connection portion 108) and the orifice plate 106. The second gap 118 serves to isolate the second connection portion 108 from the orifice plate 106 so that the orifice plate 106 is connected to the first connection portion 107 only. It should be noted that a position at which the orifice plate 106 is connected to the first connection portion 107 is the second connection position, and the second notch 119 is formed at the second connection position. The orifice plate 106 is broken from the second notch 119 when the thermal runaway of the battery 1000 occurs. Since the orifice plate 106 is only connected to the first connection portion 107 and is not connected to the second connection segment 117, and the second gap 118 is formed between the orifice plate 106 and the second connection portion 108, the possibility of shorting the orifice plate 106 and the second connection portion 108 is reduced.

Further, in the present embodiment, the first notch 110 is formed on the first connection segment 116, the first connection segment 116 and the top cover 103 are spaced apart (that is, there is no connection relationship between the first connection segment 116 and the top cover 103), and the second connection segment 117 is connected to the top cover 103. When the thermal runaway of the battery 1000 occurs, the second connection portion 108 is broken at the first connection segment 116, thereby breaking the connection between the second connection portion 108 and the first connection portion 107, which causes the orifice plate 106 to be disconnected from the top cover 103.

More specifically, in view of the stability of the structural connection, the cover plate assembly 100 further includes an insulating member 120 disposed within the second gap 118. On the one hand, the insulating member 120 is capable of insulating the orifice plate 106 from the second connection portion 108 so as to avoid shorting the orifice plate 106 from the second connection portion 108 after the orifice plate 106 is broken. On the other hand, the insulating member 120 plays a supporting role and is filled in the second gap 118, so that the orifice plate 106 and the second connection portion 108 are in a stress-balanced state.

Further, a second notch 119 is formed in the orifice plate 106, an opening of the second notch 119 is provided toward the first connection portion 107, and a width of the second notch 119 is gradually decreased in the direction of the first connection portion 107 facing toward the orifice plate 106. Specifically, the orifice plate 106 includes a third connection segment and a fourth connection segment provided around the third connection segment. The third connection segment is connected to the first connection segment 107. The second notch 119 is formed on the third connection segment for two purposes. One purpose is to protect the second notch 119 through the first connection segment 107, so as to prevent the orifice plate 106 from breaking at the second notch 119 in advance due to uneven stress during welding. Another purpose is to allow the orifice plate 106 to break at the feature location (the third connection segment), thereby avoiding the occurrence of flying debris or the like to be in contact with other sites during the breaking process, and further resulting in shorting.

Referring to FIGS. 1 and 2, multiple welding portions 111 are formed on one end surface of the top cover 103 which faces away from the connection sheet 102, and the multiple welding portions 111 surround a center of the connection sheet 102. In the present embodiment, the multiple welding portions 111 are provided at the edges of the top cover 103. The multiple welding portions 111 are provided at intervals. The distance between every two adjacent welding portions 111 is the same. In this case, the multiple welding portions 111 are arranged on the top cover 103 in an equidistant circumferential manner, so that the torque resistance of the top cover 103 can be improved.

Specifically, in the present embodiment, each of the welding portions 111 has a first side edge 112 and a second side edge 113 which are oppositely disposed. The second side edge 113 is disposed close to the edge of the connection sheet 102, the distance between the first side edge 112 and the second side edge 113 is denoted by L₁, and the shortest distance between the first side edge 112 and the center of the connection sheet 102 is denoted by L₂, so that the size and the position of each of the welding portions 111 can be limited by the distances L₁ and L₂. In actual application, the position of the first side edge 112 is determined according to the shortest distance L₂. When the position of the first side edge 112 is determined, the position of the second side edge 113 is determined according to the distance L₁. Thus, the specific position of the welding portion 111 can be determined. More specifically, the distance L₁ satisfies 0.1mm≤L₁≤0.3mm and the distance L₂ satisfies 6.8mm≤ L₂<8.7mm. A value of the distance between the first side edge 112 and the second side edge 113 may be 0.1 mm, 0.12mm, 0.14mm, 0.15mm, 0.16mm, 0.18mm, 0.2mm, 0.21mm, 0.22mm, 0.23mm, 0.24mm, 0.25mm, 0.26mm, 0.27mm, 0.28mm, 0.29mm, or 0.30mm. A value of the shortest distance between the first side edge 112 and the center of the connection sheet 102 may be 6.80mm, 6.85mm, 6.90mm, 6.92mm, 6.95mm, 6.99mm, 7.01mm, 7.05mm, 7.10mm, 7.15mm, 7.20mm, 7.25mm, 7.30mm, 7.35mm, 7.40mm, 7.45mm, 7.50mm, 7.55mm, 7.60mm, 7.70mm, 7.80mm, 7.85mm, 7.90mm, 8.0mm, 8.1mm, 8.2mm, 8.3mm, 8.4mm, 8.5mm, 8.61mm, 8.62mm, 8.64mm, 8.65mm, 8.68mm, 8.69mm, or 8.7mm. Further, in a preferred embodiment, the value of the distance from the first side edge 112 to the center of the connection sheet 102 is 8.5mm and the value of the distance from the first side edge 112 to the second side edge 113 is 0.25 mm.

Further, the radian of each of the welding portions 111 is denoted by α, and satisfies 35°≤α≤45°. Specifically, the radian of each of the welding portions 111 may be 35°, 36°, 37°, 38°, 39°, 40°, 41°, 42°, 43°, 44°, or 45°.

In order to ensure the strength of the battery 1000, the material of the housing 200 of the battery 1000 is generally a metal material, and the metal material is mostly a conductive material. So, the cover plate assembly 100 further includes a seal 114 surrounding the outer sides of both the top cover 103 and the connection assembly 101. The seal 114 is arranged to isolate the connections of both the top cover 103 and the connection assembly 101 to the housing 200, thereby avoiding short circuits caused by the direct contact of the top cover 103 or the connection assembly 101 with the housing 200. In this embodiment, the seal 114 is preferably a sealing rubber ring.

Referring to FIG. 1 and FIG. 2, in which the seal in FIG. 1 is in an unfolded state, the multiple welding portions 111 are formed at one end of the top cover 103 which faces away from the connection sheet 102. That is, the multiple welding portions 111 are located on the outside. The welding portions 111 are exposed to the outside for a long time, which causes the welding spots on the multiple welding portions 111 to be oxidized and corroded. Therefore, in the present embodiment, an end of the seal 114 which is adjacent to the top cover 103 is folded in the direction of facing toward the top cover 103 to form a first extension 115, which is coveringly disposed on the multiple welding portions 111. An orthographic projection of the first extension 115 on the top cover 103 covers the multiple welding portions 111, so that the multiple welding portions 111 are isolated from the outside, thereby preventing the welding spots on the multiple welding portions 111 from being oxidized.

It should be noted that the length of the first extension 115 is related to the size and the position of the multiple welding portions 111. It is necessary to consider that all of the welding portions 111 are covered to avoid exposure of the welding spots on the welding portions 111, and the first extension 115 is prevented from being excessively long to affect the current transfer of the top cover 103. Specifically, in the present embodiment, the first extension 115 has a first end facing toward the center of the top cover 103. The distance between the first end and the center of the top cover 103 is denoted by L₃, and satisfies 13.6mm≤2L₃≤14.4mm. After the research and the testing are repeated by the applicant, the distance L₃ needs to satisfy 13.6mm≤2L₃≤14.4mm. More specifically, the length of the first extension 115 may be 13.6mm, 13.65mm, 13.7mm, 13.75mm, 13.8mm, 13.85mm, 13.9mm, 13.95mm, 14.0mm, 14.05mm, 14.1mm, 14.15mm, 14.2mm, 14.25mm, 14.3mm, 14.35mm, or 14.4mm. As a preferred embodiment, the first extension 115 has a length of 14mm.

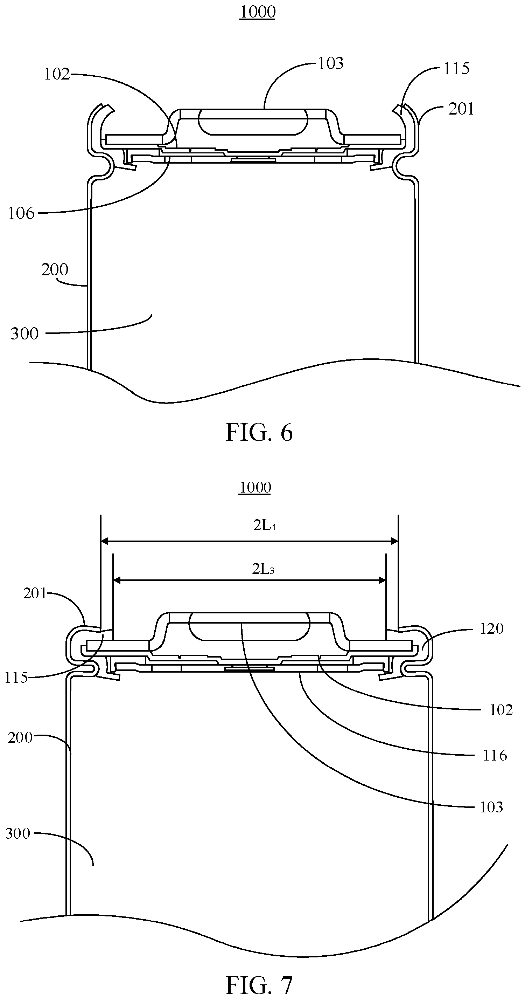

Referring to FIGS. 6 and 7, a battery 1000 includes a housing 200, a core 300, and a cover assembly 100. A cavity is formed in the housing 200. The core 300 is disposed within the housing 200. The cover plate assembly 100 is provided on the core 300, and the connection assembly 101 is connected to the core 300. The specific structure of the cover plate assembly 100 is described with reference to the above-described embodiments. Since the battery 1000 of the present invention employs all the technical solutions of all the above-described embodiments, all the beneficial effects achieved by the technical solutions having at least the above-described embodiments will not be described here.

It should be noted that, in the above-described embodiment, the seal 114 is a sealing rubber ring, and the sealing rubber ring is an elastic member which can be rebounded. Therefore, the first extension 115 is fixed by other members. In consideration of costs, and the like, in the present embodiment, referring to FIG. 6, the seal 114 and the housing 200 in FIG. 6 are both in an unfolded state, and the first extension 115 is fixed by the housing 200. Specifically, one end of the housing 200 which is close to the cover plate assembly 100 is folded toward the cover plate assembly 100 so as to form a second extension 201. The second extension 201 is coveringly disposed on the cover plate assembly 100 so as to fix the first extension 115 to the top cover 103. The housing 200 is generally made of a metal material, and the metal material is plastically deformed during bending and thus not returned to the original state. Therefore, the first extension 115 is pressed against and fixed to the top cover 103. At the same time, the cover plate assembly 100 can be limited, so that the cover plate assembly 100 is prevented from being offset, thereby oppositely fixing the cover plate assembly 100 and the core 300.

Referring to FIG. 7, the seal 114 and the housing 200 in FIG. 7 are both in a folded state, and the length of the second extension 201 is not suitable to be too long or too short. If the length of the second extension 201 is too long, the housing 200 is in contact with the top cover 103, causing a short circuit. If the length of the second extension 201 is too short, the first extension 115 cannot be pressed down completely, thereby causing the first extension 115 to lift up, and further causing the multiple welding portions 111 to be exposed. So, the multiple welding portions 111 are at risk of being corroded. Specifically, in this embodiment, the second extension has a second end facing the center of the top cover, and the distance between the second end and the center of the top cover is denoted by L₄, and satisfies 17.0mm≤ 2L₄ ≤ 17.8mm. More specifically, the distance L₄ may be 17.0mm, 17.05mm, 17.1mm, 17.15mm, 17.2mm, 17.25mm, 17.3mm, 17.35mm, 17.4mm, 17.45mm, 17.5mm, 17.55mm, 17.6mm, 17.65mm, 17.7mm, 17.75mm, or 17.8mm. As a preferred embodiment, the length of the second extension 201 is 1.2 mm.

The technical solutions of the present application will be further described in detail below in conjunction with specific examples and specific data. It should be understood that the following examples are only used to explain the present application and are not intended to limit the present application.

### Example 1

The battery includes a cover plate assembly, a core and a housing. The housing includes a second extension. A distance L₄ between a second end of the second extension and the center of the top cover is 17.4mm. A specific size of the cover plate assembly is as follows.

The top cover includes a core material and an outer layer, where the core material is copper, the outer layer is nickel, the thickness D₁ of the core material is 0.5 mm, and the thickness D₂ of the outer layer is 5 µm.

The material of the connection sheet is aluminum.

The welding portion includes a first side edge and a second side edge. The shortest distance L₂ between the first side edge and the center of the connection sheet is 8.5mm, the distance L₁ between the first side edge and the second side edge is 0.25 mm, and the radian of the welding portion is 40°.

The seal includes a first extension. The distance L₃ between the first end of the first extension and the center of the top cover is 14mm.

### Comparative Example 1

The structure of the battery provided in Comparative Example 1 was identical to that of Example 1, and the sizes of the parts in Comparative Example 1 and Example 1 were the same, except that the core material and outer layer of the top cover in Comparative Example 1 were made of copper.

### Comparative Example 2

The structure of the battery provided in Comparative Example 2 was identical to that in Example 1, and sizes of the parts in Comparative Example 2 and Example 1 were the same, except that the core material of the top cover in Comparative Example 2 was steel and the outer layer of the the top cover in Comparative Example 2 was nickel.

### Example 2

The battery includes a cover plate assembly, a core and a housing. The housing includes a second extension. A distance L₄ between a second end of the second extension and the center of the top cover is 17.4mm. A specific size of the cover plate assembly is as follows.

The top cover includes a core material and an outer layer, where the core material is copper, the outer layer is nickel, the thickness D₁ of the core material is 0.8 mm, and the thickness D₂ of the outer layer is 9µm.

The material of the connection sheet is aluminum.

The welding portion includes a first side edge and a second side edge. The shortest distance L₂ between the first side edge and the center of the connection sheet is 8.5mm, the distance L₁ between the first side edge and the second side edge is 0.25 mm, and the radian of the welding portion is 40°.

The seal includes a first extension having a distance L₃ from the first end of the first extension to the center of the top cover of 14mm.

### Example 3

The battery includes a cover plate assembly, a core and a housing. The housing includes a second extension. A distance L4 from a second end of the second extension to the center of the top cover is 17.4mm. A specific size of the cover plate assembly is as follows.

The top cover includes a core material and an outer layer, where the core material is copper, the outer layer is nickel, the thickness D₁ of the core material is 0.4 mm, and the thickness D₂ of the outer layer is 4µm.

The material of the connection sheet is aluminum.

The welding portion includes a first side edge and a second side edge, the shortest distance L₂ between the first side edge and the center of the connection sheet is 8.5mm, the distance L₁ between the first side edge and the second side edge is 0.25 mm, and the radian of the welding portion is 40°.

The seal includes a first extension having a distance L₃ from the first end of the first extension to the center of the top cover of 2.55mm.

### Example 4

The battery includes a cover plate assembly, a core and a housing. The housing includes a second extension. A distance L₄ from a second end of the second extension to the center of the top cover is 17.4mm. A specific size of the cover plate assembly is as follows.

The top cover includes a core material and an outer layer, where the core material is copper, the outer layer is nickel, the thickness D₁ of the core material is 0.6 mm, and the thickness D₂ of the outer layer is 5µm.

The material of the connection sheet is aluminum.

The welding portion includes a first side edge and a second side edge, the shortest distance L₂ between the first side edge and the center of the connection sheet is 8.5mm, the distance L₁ between the first side edge and the second side edge is 0.25 mm, and the radian of the welding portion is 30°.

The seal includes a first extension having a distance L₃ from the first end of the first extension to the center of the top cover of 14mm.

### Example 5

The battery includes a cover plate assembly, a core and a housing. The housing includes a second extension. A distance L₄ from a second end of the second extension to the center of the top cover is 17.4mm. A specific size of the cover plate assembly is as follows.

The top cover includes a core material and an outer layer, where the core material is copper, the outer layer is nickel, the thickness D₁ of the core material is 0.6 mm, and the thickness D₂ of the outer layer is 5 µm.

The material of the connection sheet is aluminum.

The welding portion includes a first side edge and a second side edge, the shortest distance L₂ between the first side edge and the center of the connection sheet is 8.5mm, the distance L₁ between the first side edge and the second side edge is 0.25 mm, and the radian of the welding portion is 35°.

The seal includes a first extension having a distance L₃ from the first end of the first extension to the center of the top cover of 14mm.

### Example 6

The battery includes a cover plate assembly, a core and a housing. The housing includes a second extension. A distance L₄ from a second end of the second extension to the center of the top cover is 17.4mm. A specific size of the cover plate assembly is as follows.

The top cover includes a core material and an outer layer, where the core material is copper, the outer layer is nickel, the thickness D₁ of the core material is 0.6 mm, and the thickness D₂ of the outer layer is 5µm.

The material of the connection sheet is aluminum.

The welding portion includes a first side edge and a second side edge, the shortest distance L₂ between the first side edge and the center of the connection sheet is 8.5mm, the distance L₁ between the first side edge and the second side edge is 0.25 mm, and the radian of the welding portion is 45°.

The seal includes a first extension having a distance L₃ from the first end of the first extension to the center of the top cover of 14mm.

### Example 7

The battery includes a cover plate assembly, a core and a housing. The housing includes a second extension. A distance L₄ from a second end of the second extension to the center of the top cover is 17.4mm. A specific size of the cover plate assembly is as follows.

The top cover includes a core material and an outer layer, where the core material is copper, the outer layer is nickel, the thickness D₁ of the core material is 0.6 mm, and the thickness D₂ of the outer layer is 5µm.

The material of the connection sheet is aluminum.

The welding portion includes a first side edge and a second side edge, the shortest distance L₂ between the first side edge and the center of the connection sheet is 7.69mm, the distance L₁ between the first side edge and the second side edge is 0.25 mm, and the radian of the welding portion is 40°.

The seal includes a first extension having a distance L₃ from the first end of the first extension to the center of the top cover of 14mm.

### Example 8

The battery includes a cover plate assembly, a core and a housing. The housing includes a second extension. A distance L₄ from a second end of the second extension to the center of the top cover is 17.4mm. A specific size of the cover plate assembly is as follows.

The top cover includes a core material and an outer layer, where the core material is copper, the outer layer is nickel, the thickness D₁ of the core material is 0.6 mm, and the thickness D₂ of the outer layer is 5µm.

The material of the connection sheet is aluminum.

The welding portion includes a first side edge and a second side edge, the shortest distance L₂ between the first side edge and the center of the connection sheet is 6.92mm, the distance L₁ between the first side edge and the second side edge is 0.25 mm, and the radian of the welding portion is 40°.

The seal includes a first extension having a distance L₃ from the first end of the first extension to the center of the top cover of 14mm.

### Performance test

1. The batteries in Examples 1 to 8 and Comparative Examples 1 to 2 were subjected to resistance testing, and the resistance of the cover plate assembly was tested by a resistance meter. For a specific test method, a conventional test method in the art may be referred to. Under the same test conditions, multiple tests were performed on the battery in each example, and the results of each test were recorded, and the average value was obtained, i.e., the actual resistance value of the cover plate assembly. The specific test results are shown in Table 1 and Table 2.

**Table 1: Resistance values (mQ) of Examples 1-3 and Comparative Examples 1-2**

| | Example 1 | Comparative Example 1 | Comparative Example 2 | Example 2 | Example 3 |
|---|---|---|---|---|---|
| 1 | 0.116 | 0.104 | 0.227 | 0.124 | 0.098 |
| 2 | 0.101 | 0.103 | 0.226 | 0.122 | 0.098 |
| 3 | 0.098 | 0.098 | 0.222 | 0.121 | 0.097 |
| 4 | 0.103 | 0.102 | 0.212 | 0.123 | 0.101 |
| 5 | 0.105 | 0.104 | 0.193 | 0.117 | 0.096 |
| 6 | 0.100 | 0.104 | 0.223 | 0.115 | 0.098 |
| 7 | 0.100 | 0.100 | 0.227 | 0.119 | 0.099 |
| 8 | 0.099 | 0.103 | 0.230 | 0.130 | 0.096 |
| 9 | 0.100 | 0.106 | 0.221 | 0.116 | 0.094 |
| 10 | 0.102 | 0.103 | 0.218 | 0.121 | 0.101 |
| 11 | 0.101 | 0.101 | 0.215 | 0.119 | 0.101 |
| 12 | 0.099 | 0.102 | 0.229 | 0.117 | 0.097 |
| 13 | 0.102 | 0.101 | 0.222 | 0.119 | 0.098 |
| 14 | 0.106 | 0.101 | 0.234 | 0.112 | 0.101 |
| 15 | 0.099 | 0.107 | 0.214 | 0.116 | 0.101 |
| 16 | 0.108 | 0.103 | 0.231 | 0.115 | 0.094 |
| 17 | 0.103 | 0.100 | 0.224 | 0.120 | 0.092 |
| 18 | 0.096 | 0.101 | 0.232 | 0.121 | 0.094 |
| 19 | 0.102 | 0.103 | 0.214 | 0.113 | 0.097 |
| 20 | 0.101 | 0.102 | 0.216 | 0.118 | 0.099 |
| 21 | 0.097 | 0.104 | 0.220 | 0.115 | 0.096 |
| 22 | 0.100 | 0.103 | 0.214 | 0.115 | 0.095 |
| 23 | 0.098 | 0.101 | 0.216 | 0.120 | 0.099 |
| 24 | 0.100 | 0.102 | 0.211 | 0.128 | 0.095 |
| 25 | 0.104 | 0.101 | 0.224 | 0.120 | 0.098 |
| Average value | 0.1016 | 0.10236 | 0.2206 | 0.119 | 0.097 |

**Table 2: Resistance values (mQ) of Examples 4-8**

| | Example 4 | Example 5 | Example 6 | Example 7 | Example 8 |
|---|---|---|---|---|---|
| 1 | 0.124 | 0.103 | 0.100 | 0.101 | 0.104 |
| 2 | 0.122 | 0.108 | 0.101 | 0.102 | 0.102 |
| 3 | 0.121 | 0.109 | 0.101 | 0.102 | 0.103 |
| 4 | 0.123 | 0.108 | 0.100 | 0.096 | 0.106 |
| 5 | 0.117 | 0.107 | 0.101 | 0.098 | 0.105 |
| 6 | 0.115 | 0.107 | 0.100 | 0.099 | 0.104 |
| 7 | 0.119 | 0.110 | 0.096 | 0.101 | 0.103 |
| 8 | 0.130 | 0.107 | 0.097 | 0.106 | 0.104 |
| 9 | 0.116 | 0.110 | 0.098 | 0.103 | 0.105 |
| 10 | 0.121 | 0.107 | 0.100 | 0.104 | 0.101 |
| 11 | 0.119 | 0.111 | 0.101 | 0.101 | 0.106 |
| 12 | 0.117 | 0.110 | 0.098 | 0.103 | 0.100 |
| 13 | 0.119 | 0.108 | 0.096 | 0.112 | 0.101 |
| 14 | 0.112 | 0.110 | 0.100 | 0.108 | 0.105 |
| 15 | 0.116 | 0.110 | 0.099 | 0.106 | 0.099 |
| 16 | 0.115 | 0.112 | 0.103 | 0.100 | 0.100 |
| 17 | 0.120 | 0.112 | 0.105 | 0.104 | 0.099 |
| 18 | 0.121 | 0.111 | 0.102 | 0.103 | 0.107 |
| 19 | 0.113 | 0.113 | 0.101 | 0.098 | 0.106 |
| 20 | 0.118 | 0.114 | 0.106 | 0.110 | 0.098 |
| 21 | 0.115 | 0.105 | 0.104 | 0.112 | 0.104 |
| 22 | 0.115 | 0.110 | 0.109 | 0.107 | 0.103 |
| 23 | 0.120 | 0.111 | 0.102 | 0.099 | 0.105 |
| 24 | 0.128 | 0.104 | 0.103 | 0.101 | 0.101 |
| 25 | 0.120 | 0.104 | 0.107 | 0.106 | 0.106 |
| Average value | 0.11904 | 0.10884 | 0.1012 | 0.10328 | 0.10308 |

From Examples 1 and Comparative Example 1, it can be concluded that under the same conditions, the resistance value tested in Example 1 was 0.1016mQ, and the resistance value tested in Comparative Example 1 was 0.10236mQ. From the data, it can be seen that the resistance values of Examples 1 and Comparative Example 1 were not significantly different, but the resistance value of Example 1 was slightly smaller than that of Example 1, so that the resistance value of the top cover can be reduced by means of plating nickel on copper.

From Example 1 and Comparative Example 2, it can be concluded that under the same conditions, the resistance value tested in Example 1 is 0.1016mΩ, and the resistance value tested in Comparative Example 2 is 0.2206mQ. From the data, it can be concluded that the resistance value in Example 1 is half of the resistance value in Comparative Example 2. Compared with the steel material, the present application can effectively reduce the resistance value of the top cover by means of plating nickel on copper.

From Example 1, Example 2 and Example 3, it can be concluded that under the same conditions, the thickness of the core material and the thickness of the outer layer in Example 2 are all larger than the thickness of the core material and the thickness of the outer layer in Example 1, the resistance value in Example 1 is 0.1016mQ, the resistance value of Example 2 is 0.10328mQ, the resistance value in Example 2 is larger than the resistance value in Example 1, the thickness of the core material and the thickness of the outer layer in Example 3 are all smaller than the thickness of the core material and the thickness of the outer layer in Example 1, the resistance value in Example 3 is 0.097mQ, and the resistance value in Example 3 is slightly smaller than the resistance value in Example 1. That is, the relationship among the resistance values in Example 1, Example 2 and Example 3 satisfies: Example 3<Example 1<Example 2. It can be seen from the above-mentioned relationship that the resistance value of the top cover increases as the thickness of the core material and the thickness of the outer layer increase. However, when the resistance value is taken into account, the strength of the top cover also needs to be considered. If the thickness of the core material and the thickness of the outer layer are infinitely reduced, the strength of the top cover itself also decreases.

From Example 1, Example 4, Example 5 and Example 6, it can be obtained that under the same conditions, the radian of the welding portion in Example 4 is smaller than the radian of the welding portion in Example 5, the radian of the welding portion in Example 5 is smaller than the radian of the welding portion in Example 1, the radian of the welding portion in Example 1 is smaller than the radian of the welding portion in Example 6, the resistance value in Example 4 is larger than the resistance value in Example 5, the resistance value in Example 5 is larger than the resistance value in Example 1, the resistance value in Example 1 is smaller than the resistance value in Example 6, the resistance value in Example 6 is smaller than the resistance value in Example 5, and the relationship among the resistance values in Example 1, Example 4, Example 5 and Example 6 satisfies: Example 1< Example 6< Example 5< Example 4. The resistance value of the top cover decreases along with the increase of the radian of the welding portion. When the radian of the welding portion increases to a certain value, the resistance value of the top cover increases along the increase of the radian of the welding portion. The welding portion functions to perform welding. The difficulty degree of welding affects the thickness of the outer layer. In the welding process, the simpler the welding degree is, the smaller the effect on the thickness of the outer layer is; the more complex the welding is, the greater the effect on the outer layer is; and the greater the effect on the outer layer is, the greater the relationship between the outer layer and the core material is changed. Therefore, the effect on the resistance value of the top cover is greater. It can be seen from Examples 1, 4, 5 and 6 that the radian of the welding portion can have a certain effect on the resistance value of the top cover under the same conditions. It can reflect that the radian of the welding portion has a certain influence on the welding of the top cover.

From Example 6, Example 7 and Example 8, it can be seen that under the same conditions, the welding portions in Example 6, Example 7 and Example 8 have different welding positions, the welding portions in Example 8 are farthest from the center of the connection sheet, the welding portions in Example 6 are closest to the center of the connection sheet, the resistance value in Example 6 is smaller than the resistance value in Example 8, and the resistance value in Example 8 is smaller than the resistance value in Example 7. And, it can be seen from the relationship among them, that the position of the welding portions can affect the difficulty degree of welding. The simpler the welding degree is, the smaller the effect on the thickness of the outer layer is; and the more complex the welding degree is, the greater the effect on the outer layer is. As the distances among the welding portions and the connection sheet are changed, when the welding portions are closer to the center of the connection sheet, the resistance of the top cover increases, thereby indicating that the welding difficulty degree increases. As the distance increases, the resistance value of the top cover starts to decrease. However, the closer the welding portion is to the center of the connection sheet, the larger the size required for the first extension (the first extension needs to cover the welding portions to avoid corrosion of the welding portions). When the size of the first extension increases, the size of the second extension increases (the second extension presses against the first extension to avoid to lift up the first extension), and the size increase of the second extension causes the negative electrode and the positive electrode of the battery to be closer and closer together, so that there is a risk of short circuit. Therefore, the welding portion should not be too close to the center of the connection sheet.

2. The top covers in Examples 1 to 8 were subjected to salt spray testing, the top covers in Examples 1 to 8 were placed in a neutral salt spray test box for testing, and the surfaces of the top covers were observed at intervals. The results of the specific testing are shown in Table 3.

**Table 3: Results of Salt fog test**

| | Example 1 | Example 2 | Example 3 | Example 4 | Example 5 | Example 6 | Example 7 | Example 8 |
|---|---|---|---|---|---|---|---|---|
| 12h | No patina | No patina | No patina | No patina | No patina | No patina | No patina | No patina |
| 24 h | No patina | No patina | No patina | No patina | No patina | No patina | No patina | No patina |
| 36 h | No patina | No patina | No patina | No patina | No patina | No patina | No patina | No patina |
| 48 h | No patina | No patina | No patina | No patina | No patina | No patina | No patina | No patina |

From Table 3, it can be seen that the top covers provided in Examples 1 to 8 produced patina during salt spray testing and had good corrosion resistance.

## Claims

1. A cover plate assembly (100), comprising:
a connection assembly (101) comprising a connection sheet made of aluminum; and
a top cover (103) provided on the connection sheet (102), the top cover (103) comprising a core material (104) and an outer layer (105) located outside the core material (104), wherein the core material (104) is welded to the connection sheet (102) by the outer layer (105), a material of the core material (104) comprises copper and a material of the outer layer (105) comprises nickel.

2. The cover plate assembly (100) according to claim 1, wherein a thickness of the core material (104) is denoted by D₁, and satisfies D₁≥0.1mm; and a thickness of the outer layer (105) is denoted by D₂, and satisfies D₂≥3µm.

3. The cover plate assembly (100) according to claim 2, wherein the thickness of the core material (104) satisfies 0.4mm≤D₁≤0.8mm, and the thickness of the outer layer (105) satisfies 4µm≤D₂≤9µm.

4. The cover plate assembly (100) according to any one of claims 1 to 3, wherein the connection assembly (101) further comprises an orifice plate (106) connected at a side of the connection sheet (102) which faces away from the top cover (103);
the connection sheet (102) comprises a first connection portion (107) and a second connection portion (108) connected to a periphery of the first connection portion (107), the second connection portion (108) is connected to the top cover (103), the first connection portion (107) is connected to the orifice plate (106), and the first connection portion (107) is recessed in a direction away from the top cover (103) to form a first gap (109) with the top cover (103).

5. The cover plate assembly (100) according to claim 4, wherein the second connection portion (108) is formed with a first notch (110), an opening of the first notch (110) is disposed toward the top cover (103), a width of the first notch (110) is gradually decreased in a direction of the second connection portion (108) facing toward the orifice plate (106); and/or,
the orifice plate (106) is provided with a second notch (119), an opening of the second notch (119) is disposed toward the first connection portion (107), and a width of the second notch (119) is decreased gradually in a direction of the first connection portion (107) facing towards the orifice plate (106).

6. The cover plate assembly (100) according to claim 4 or 5, wherein a second gap (118) is formed between the second connection portion (108) and the orifice plate (106), and an insulator (120) is disposed in the second gap (118).

7. The cover plate assembly (100) according to any one of claims 1 to 6, wherein a plurality of welding portions (111) are formed on an end surface of the top cover (103) which faces away from the connection sheet (102), and the plurality of welding portions (111) surround a center of the connection sheet (102).

8. The cover plate assembly (100) according to claim 7, wherein each of the plurality of welding portions comprises a first side edge (112) and a second side edge (113) oppositely disposed, the second side edge (113) is disposed to be adjacent to an edge of the connection sheet (102), a distance between the first side edge (112) and the second side edge (113) is denoted by L₁, and satisfies 0.1mm≤L₁≤0.3mm, and a shortest distance between the first side edge (112) and the center of the connection sheet is denoted by L₂, and satisfies 6.8mm≤L₂≤8.7mm.

9. The cover plate assembly (100) according to claim 7 or 8, wherein a radian of each of the welding portions is denoted by α, and satisfies 35°≤α≤45°.

10. The cover plate assembly (100) according to any one of claims 1 to 9, further comprising a seal (114) around outer sides of both the top cover (103) and the connection assembly (101).

11. The cover plate assembly (100) according to claim 10, wherein an end of the seal (114) which is adjacent to the top cover (103) is folded toward the top cover (103) to form a first extension (115), the first extension (115) is coveringly disposed on the plurality of the welding portions (111), and an orthographic projection of the first extension (115) on the top cover covering (103) covers the plurality of the welding portions (111).

12. The cover plate assembly (100) according to claim 11, wherein the first extension (115) comprises a first end facing toward a center of the top cover (103), and a distance between the first end and the center of the top cover (103) is denoted by L₃, and satisfies 13.6mm≤2L₃≤14.4mm.

13. A battery (1000) comprising:
a housing (200) in which a cavity is formed;
a core (300) disposed in the housing (200); and
the cover plate assembly (100) according to any one of claims 1 to 12, wherein the cover plate assembly (100) is coveringly disposed on an opening of the housing (200), and the connection assembly (101) is connected to the core (300).

14. The battery (1000) according to claim 13, wherein an end of the housing (200) which is adjacent to the cover plate assembly (100) is folded toward the cover plate assembly (100) to form a second extension (201), and the second extension (201) is coveringly disposed on the cover plate assembly (100) to fix oppositely the cover plate assembly (100) and the core (300).

15. The battery (1000) according to claim 14, wherein the second extension (201) comprises a second end facing towards the center of the top cover (103), a distance between the second end and the center of the top cover (103) is denoted by L₄, and satisfies 17.0mm≤2L₄≤17.8mm.
